# FASCICULE DE BREVET EUROPEEN

(11) **EP 1 006 343 B1**
(45) Date de publication et mention de la délivrance du brevet: **01.09.2010**
(21) Numéro de dépôt: 99490040.5
(22) Date de dépôt: 01.12.1999
(51) Int. Cl.: G01F 15/18, F16L 25/00

(54) **Dispositif de maintien d'un appareil de mesure d'une caractéristique d'un fluide**
Spannvorrichtung für ein Instrument zur Messung einer Eigenschaft einer Flüssigkeit
Clamping device for an instrument for measuring a property of a fluid

(30) Priorité: 03.12.1998 FR 9815451
(43) Date de publication de la demande: 07.06.2000
(73) Titulaire: HYDROMECA, 62860 Marquion (FR)
(72) Inventeur: Henault, Philippe, 59400 Cambrai (FR); Henault, Francis, 26160 Pont de Barret (FR)
(74) Mandataire: Tournel, Jean Louis

(56) Documents cités:
- FR-A- 2 743 629
- US-A- 4 516 794
- US-A- 5 052 721

## Description

L'invention se rapporte à un dispositif de maintien entre deux tronçons d'une conduite, d'un appareil, notamment, de mesure notamment d'une caractéristique d'un fluide circulant sous pression dans cette conduite.

L'invention s'applique avantageusement, mais non exclusivement à un dispositif de maintien d'un compteur d'eau, volumétrique ou de vitesse, entre deux tronçons d'une conduite d'alimentation d'une installation.

Un compteur d'eau comprend un corps qui, abritant un instrument de mesure, est destiné à être au moins partiellement traversé par l'eau.

A cet effet, le corps du compteur comprend deux parties tubulaires qui, alignées, constituent, l'une, un conduit d'admission et, l'autre, un conduit de sortie de l'eau.

Ces parties tubulaires sont classiquement chacune équipées, d'une part, d'une portée extrême d'appui étanche sur une portée complémentaire, telle une portée présentée par un tronçon de conduite et, d'autre part, d'un filetage externe destiné à coopérer avec un écrou de raccordement à un tronçon tubulaire, tel un écrou de raccordement au tronçon de conduite précité.

Le raccordement d'un compteur à chacun des tronçons de conduite exige la mise en oeuvre de plusieurs clefs de manoeuvre et/ou d'immobilisation des écrous, ce qui complique le montage et le rend fastidieux.

De plus, les compteurs sont très souvent installés dans des endroits où il est particulièrement difficile de manoeuvrer des clefs.

Dans certains cas (US-4.516.794), l'un des tronçons tubulaires du support est mobile et une came permet d'appliquer l'une contre l'autre les portées extrêmes.

Il faut donc toujours faire usage d'une clé de manoeuvre et c'est l'ajustement de la came qui induit la qualité du serrage.

Pour permettre un certain ajustement de la longueur d'une conduite (US-5.052.721), il est connu de permettre au tronçon extrême de coulisser dans une chemise mais la position de ce tronçon est déterminée par le serrage de l'écrou extrême et c'est le serrage de cet écrou qui détermine l'étanchéité.

On connait un dispositif US 974 651 mettant en oeuvre une pièce coulissante et un coin pour deplacer cette piece coulissante.

Un résultat que l'invention vise à obtenir est un dispositif qui, tout en étant économique à réaliser, permet de monter et démonter rapidement un appareil de mesure, tel un compteur sans habileté particulière et sans faire usage de clefs de manoeuvre.

A cet effet, l'invention a pour objet un dispositif de maintien entre deux tronçons d'une conduite conforme à la Revendication 1.

L'invention sera bien comprise à l'aide de la description ci-après faite, à titre d'exemple non limitatif, en regard du dessin ci-annexé qui représente :

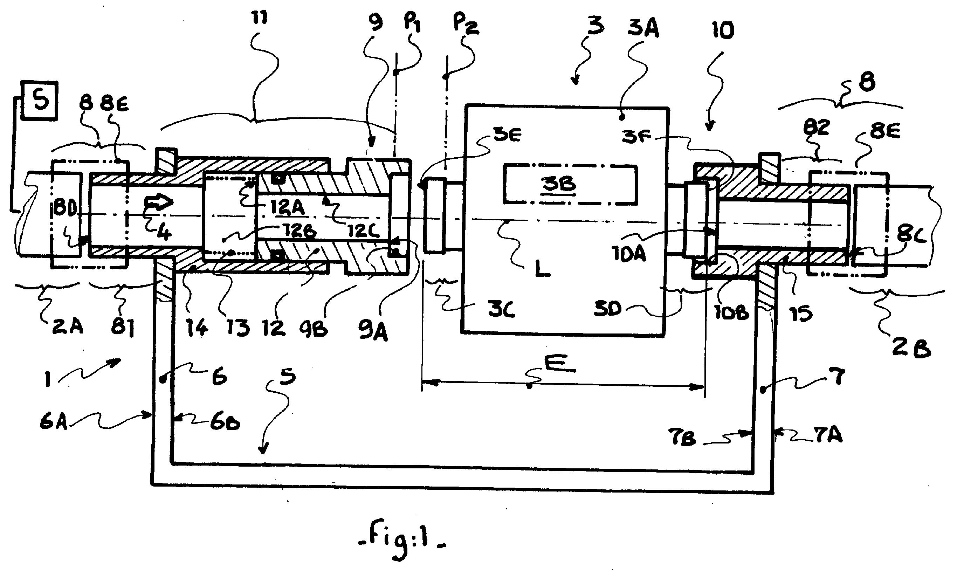

- figure 1 : vu en coupe selon un plan longitudinal, un dispositif de maintien selon l'invention,

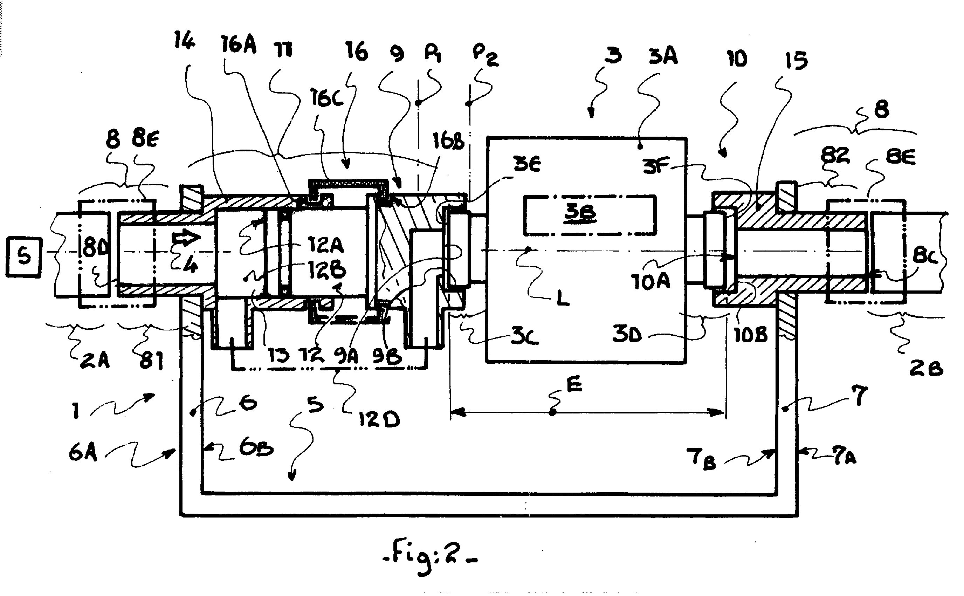

- figure 2 : vu en coupe selon un plan longitudinal, un dispositif de maintien selon une variante de l'invention.

En se reportant au dessin, on voit un dispositif 1 de maintien entre deux tronçons 2A, 2B d'une conduite, d'un appareil 3 de mesure d'une caractéristique d'un fluide 4, qui notamment, issu d'une source S de fluide sous pression, doit circuler sous pression dans cette conduite.

Sur les dessins, le fluide 4 a été symbolisé par une flèche 4.

Celui 2A des tronçons de conduite 2A, 2B qui achemine le fluide sous pression 4 depuis la source S est dit tronçon de conduite amont 2A ou d'entrée du fluide, tandis que l'autre tronçon 2B est dit tronçon aval ou de sortie du fluide.

L'appareil 3 comprend un corps 3A qui, abritant notamment un instrument 3B de mesure, est destiné à être au moins partiellement traversé par le fluide sous pression 4 circulant dans la conduite.

Le corps 3A de l'appareil 3 comprend deux parties tubulaires 3C, 3D qui, alignées selon un axe L, constituent, l'une 3C, un conduit d'admission du fluide sous pression 4 et, l'autre 3D, un conduit de sortie dudit fluide sous pression 4.

Ces parties tubulaires 3C, 3D sont chacune équipées d'une portée extrême 3E, 3F d'appui étanche sur une portée complémentaire 9A, 10A, au moins indirectement reliée à un tronçon 2A, 2B de conduite.

Les portées extrêmes 3E, 3F du corps 3A de l'appareil, sont situées dans des plans sensiblement parallèles espacés d'une valeur déterminée E.

Le dispositif de maintien 1 comprend une structure 5 rigide qui, notamment destinée à être fixée à un support (non représenté), comporte deux parois 6, 7 sensiblement parallèles présentant deux faces opposées 6A, 7A et deux faces en vis à vis 6B, 7B.

Afin de faciliter la lecture du dessin, la structure 5 a été fortement schématisée.

Les deux faces opposées 6A, 7A portent chacune un moyen 8 de raccordement étanche et de fixation à une extrémité d'un tronçon 2A, 2B de conduite.

Pour le dispositif de maintien, dans l'exemple représenté, les deux faces 6B, 7B en vis à vis sont, quant à elles, chacune équipées d'un moyen 9, 10 de jonction étanche et de fixation d'un des conduits d'admission 3C et de sortie 3D de fluide 4 qui sont portés par le corps 3A de l'appareil 3, ces moyens 9, 10 de jonction permettant d'établir la communication avec les moyens 8 dits de raccordement étanche aux tronçons 2A, 2B de conduite.

Pour assurer le positionnement et la jonction étanche, les moyens 9, 10 de jonction étanche comprennent chacun deux portées 9A, 9B et 10A, 10B dont, une 9B, 10B de centrage de l'un des conduits 3C, 3D de l'appareil 3 et l'autre 9A, 10A d'appui étanche sur la portée extrême 3E, 3F présentée par ce conduit 3C, 3D.

Les portées 9A, 10A sont, par exemple, équipées d'un joint (non représenté).

De manière à permettre le montage de l'appareil 3 dans le dispositif 1 de maintien, au moins l'une 9A, 10A des portées d'appui étanche contre une portée extrême du corps est associée à un moyen 11 de déplacement commandé et de guidage entre deux positions P1, P2 dont une position P1 écartée du plan de la portée extrême considérée et une position P2 d'appui effectif contre cette portée extrême.

De manière remarquable, le moyen 11 de déplacement commandé et de guidage comprend un piston 12 qui supporte :
- celle mobile 9A des portées d'appui étanche 9A, 10A et,
- opposée à cette portée mobile 9A, une face 12A, exposée au fluide 4 sous pression qui doit traverser l'appareil 3 de mesure, de manière à, sous l'action du fluide 4, induire, d'une part, l'application énergique de la portée d'appui étanche mobile 9A vers et contre la portée extrême 3E de l'appareil avec laquelle elle doit coopérer et, d'autre part, par un effet de déplacement dudit l'appareil 3, l'application énergique de l'autre portée extrême 3F de cet appareil 3 contre la portée d'appui étanche 10A en vis à vis.

La portée 10A opposée à la portée 9A mobile est constituée dans une pièce 15 tubulaire de révolution liée à la structure 5.

On comprend donc que c'est la pression du fluide, tel le fluide hydraulique qui permet l'application énergique des portées d'étanchéité et le maintien de cette application.

Il suffit donc d'établir ou d'interrompre la pression de fluide pour pouvoir, sans outil, monter ou démonter l'appareil 3, ce qui est extrêmement pratique pour effectuer des contrôles de l'appareil ou la lecture d'indications fournies par le moyen de mesure 3B.

Il n'est plus nécessaire de disposer d'outil.

A cet effet, dans le cas où le tronçon de conduite 2B constitue la conduite d'entrée d'une installation d'alimentation en eau, il suffit d'utiliser le robinet d'interruption (non représenté) généralement situé sur le tronçon de conduite 2A situé en amont de l'appareil 3 de mesure.

Avec le dispositif de l'invention, il est facile de mettre en place ou de déposer un appareil 3, et ce, sans outil.

De manière remarquable, le moyen 11 de déplacement commandé et de guidage équipe la partie amont du dispositif 1 de maintien, c'est à dire la partie du dispositif qui est raccordée à la source S de fluide sous pression.

De manière préférentielle, le piston 12 est sollicité par un organe élastique 13, dans le sens d'application de la portée mobile 9A contre la portée extrême 3E de l'appareil 3.

Le piston 12, d'une part, est guidé en translation dans une chambre 12B réservée dans une pièce 14 solidaire de la structure 5 et, d'autre part, est constitué par une pièce qui présente, d'une part, un canal axial 12C permettant le passage du fluide 4 vers l'appareil 3 et, d'autre part, organisée autour de ce canal 12C, une face annulaire 12A soumise à l'action du fluide sous pression.

La pièce 14 qui, solidaire de la structure 5, guide le piston 12, est, par exemple, une pièce tubulaire de révolution.

Selon une variante de réalisation, le piston 12, d'une part, est guidé en translation dans une chambre 12B réservée dans une pièce solidaire de la structure 5 et, d'autre part, est constitué par une pièce cylindrique qui présente, d'une part, une face circulaire 12A exposée à l'action du fluide et, d'autre part, un canal 12C qui, en vue du passage du fluide vers l'appareil est, par une conduite de dérivation 12D, au moins indirectement relié au tronçon de conduite 2A amont.

Chaque moyen 8 de raccordement étanche comprend une partie tubulaire 81, 82 qui :
- forme saillie sur l'une des faces opposées 6A, 7A de la structure 5,
- est reliée à une autre partie tubulaire 14, 15 équipant l'une des faces 6B, 7B en vis à vis de la structure 5 et présentant une portée d'appui étanche 9A, 10A pour l'appareil 3,
- présente une portée d'appui étanche 8C, 8D contre une portée 2C, 2D d'un tronçon de conduite 2A, 2B,
- porte un élément de liaison 8E avec ledit tronçon de conduite 2A, 2B.

Par exemple, l'élément de liaison consiste en une portée filetée destinée à coopérer avec un écrou prisonnier porté par le tronçon de conduite 2A, 2B.

Avantageusement, mais non limitativement le dispositif de l'invention est réalisé au moins partiellement en matériau synthétique.

Selon une forme remarquable de réalisation, le moyen 11 de déplacement commandé et de guidage comprend un moyen 16 de plombage de l'appareil 3 en position montée sur le dispositif, c'est à dire un moyen donc la fonction est de révéler une opération de démontage non autorisée de l'appareil 3.

Dans une forme préférée de réalisation, le moyen 16 de plombage de l'appareil 3 en position montée comprend :
- d'une part, deux butées 16A, 16B dont l'une 16A est solidaire de la pièce 14 dans laquelle le piston 12 se trouve guidé et l'autre 16B est solidaire de la pièce qui constitue ledit piston 12, et
- d'autre part, un élément 16C de liaison rigide des deux butées 16A, 16B dans la position adoptée par ces butées lorsque l'appareil 3 est monté.

Avantageusement, l'élément 16C de liaison rigide est un élément dont la structure doit être rompue pour libérer les butées 16A, 16B.

Suivant une forme préférée de réalisation :
- les butées 16A, 16B sont chacune réalisées par une face d'une gorge circulaire aménagée dans une face externe de chacune des pièces 12, 14 qui portent ces butées et,
- l'élément 16C de liaison rigide consiste en une bague qui, réalisée en deux demi-parties, comprend, d'une part, des parois destinées à s'engager dans les gorge circulaires et, d'autre part, un moyen d'assemblage indémontable de ces deux demi-parties.

L'homme de l'art est à même de concevoir cette bague en respectant ces indications.

## Revendications

1. Dispositif (1) de maintien pouvant acceuillir entre deux tronçons (2A, 2B) d'une conduite, un appareil (3), de mesure d'une caractéristique d'un fluide (4) qui circule sous pression dans cette conduite,
- le corps (3A) de l'appareil (3) comprenant deux parties tubulaires (3C, 3D) constituant une conduite d'entrée et de sortie qui, alignées selon un axe (L), sont chacune équipées d'une portée extrême (3E, 3F) d'appui étanche coopérant avec une portée complémentaire (9A, 10A),
- le dispositif de maintien (1) comprenant quant à lui des moyens (9, 10) de jonction étanche et de fixation des parties tubulaires (3C, 3D) du corps (3A) de l'appareil (3), les dits moyens (9,10) de jonction étanche et de fixation étant portés par une structure (5),
- chaque moyen (9, 10) de jonction étanche comprenant deux portées (9A, 9B et 10A, 10B) dont :
. une portée (9B, 10B) dite de centrage de l'un des conduits (3C, 3D) de l'appareil (3),
. l'autre portée complémentaire (9A, 10A) d'appui étanche sur la portée extrême (3E, 3F) présentée par ce conduit (3C, 3D),
. au moins l'une (9A, 10A) de ces portées d'appui étanche étant présentée par une pièce présentant un canal (12C), cette pièce étant mobile entre deux positions (P1, P2) dont une position (P1) écartée du plan de la portée extrême considérée et une position (P2) d'appui effectif contre cette portée extrême, la dite pièce mobile (12) équipant la partie amont du dispositif de maintien,
ce dispositif de maintien étant **CARACTERISE en ce que** la pièce mobile (12) est un piston (12) qui supporte :
- celle mobile (9A) des portées d'appui étanche (9A, 10A) et,
- opposées à cette portée mobile (9A), une face (12A), exposée au fluide (4) sous pression qui doit traverser l'appareil (3) de mesure, organisée pour, sous l'action seule du fluide (4), induire et maintenir, d'une part, l'application énergique de la portée d'appui étanche mobile (9A) vers et contre la portée extrême (3E) de l'appareil avec laquelle elle doit coopérer et, d'autre part, par un effet de déplacement dudit appareil (3), l'application énergique de l'autre portée extrême (3F) de cet appareil (3) contre la portée d'appui étanche (10A) en vis-à-vis.

2. Dispositif selon la revendication 1 **caractérisé en ce que** le piston (12), est guidé en translation dans une chambre (12B) réservée dans une pièce (14) solidaire de la structure (5) et dont le canal (12C) permettant le passage du fluide (4) vers l'appareil (3) est axial, la face soumise à l'action du fluide sous pression étant organisée autour de ce canal (12C) pour constituer une face annulaire (12A).

3. Dispositif selon la revendication 1 **caractérisé en ce que** le piston (12), d'une part, est guidé en translation dans une chambre (12B) réservée dans une pièce solidaire de la structure (5) et, d'autre part, est constitué par une pièce cylindrique qui présente la face 12 A exposée à l'action du fluide laquelle face est circulaire et-le canal (12C), en vue du passage du fluide vers l'appareil est, par une conduite de dérivation (12D), au moins indirectement relié au tronçon de conduite (2A) amont.

4. Dispositif selon l'une des revendications 2 à 3 **caractérisé en ce qu'** il comprend
deux butées (16A, 16B) dont l'une (16A) est solidaire de la pièce (14) dans laquelle le piston (12) se trouve guidé et l'autre (16B) est solidaire de la pièce qui constitue ledit piston (12) les dites butées(16A, 16B) étant destinées à coopérer avec un élément (16C) de liaison rigide des deux butées (16A, 16B) dans la position adoptée par ces butées lorsque l'appareil (3) est monté.

5. Dispositif selon la revendication 4 **caractérisé en ce que** :
- les butées (16A, 16B) sont chacune réalisées par une face d'une gorge circulaire aménagée dans une face externe de chacune des pièces (12, 14) qui portent ces butées et ces gorges sont destinées à recevoir l'élément (16C) de liaison rigide qui consiste en une bague qui, réalisée en deux demi-parties, comprend, d'une part, des parois destinées à s'engager dans les gorge circulaires et, d'autre part, un moyen d'assemblage de ces deux demi-parties révélant une opération de démontage non autorisé.

## Claims

1. Retaining device (1) capable of accommodating, between two sections (2A, 2B) of a pipe, an apparatus (3) for measuring a characteristic of a fluid (4) circulating under pressure in this pipe,
- the body (3A) of the apparatus (3) comprising two tubular parts (3C, 3D) constituting an inlet and outlet pipe aligned along an axis (L), each of which is fitted with an airtight terminal support bearing (3E, 3F) co-operating with a complementary bearing (9A, 10A),
- the retaining device (1) in turn comprising airtight means (9, 10) for joining and fixing the tubular parts (3C, 3D) of the body (3A) of the apparatus (3), said airtight joining and fixing means (9, 10) being supported by a structure (5),
- each airtight joining means (9, 10) comprising two bearings (9A, 9B and 10A, 10B), of which:
- one bearing (9B, 10B) is intended to centre one of the pipes (3C, 3D) of the apparatus (3),
- the other complementary airtight support bearing (9A, 10A) being on the terminal bearing (3E, 3F) formed by this pipe (3C, 3D),
- at least one (9A, 10A) of these airtight support bearings being a part incorporating a passage (12C), which part is able to move between two positions (P1, P2), of which one is a position (P1) disposed at a distance from the plane of the terminal bearing in question and one is a position (P2) providing effective support against this terminal bearing, said moving part (12) being fitted on the downstream part of the retaining device,
this retaining device being **CHARACTERISED in that** the moving part (12) is a piston (12) which supports:
- the moving one (9A) of the airtight support bearings (9A, 10A) and,
- opposite this moving bearing (9A), a face (12A) exposed to the pressurised fluid (4) which must circulate through the measuring apparatus (3) arranged so as to induce and maintain, solely under the action of the fluid (4), the energy to apply the moving airtight support bearing (9A) towards and against the terminal bearing (3E) of the apparatus with which it is intended to co-operate on the one hand, and to induce and maintain the energy to apply the other terminal bearing (3F) of this apparatus (3) against the facing airtight support bearing (10A) due to a displacement effect of said apparatus (3) on the other hand.

2. Device as claimed in claim 1, **characterised in that** the piston (12) is guided in translation in a chamber (12B) specifically provided for this purpose in a part (14) integral with the structure (5) and the passage (12C) of which enabling the fluid (4) to circulate towards the apparatus (3) is axial, the face being exposed to the action of the pressurised fluid being disposed around this passage (12C) so as to form an annular face (12A).

3. Device as claimed in claim 1, **characterised in that** the piston (12) on the one hand is guided in translation in a chamber (12B) specifically provided for this purpose in a part integral with the structure (5) and on the other hand comprises a cylindrical part incorporating the face (12A) exposed to the action of the fluid, which face is circular, and the passage (12C) is linked at least indirectly to the downstream section of pipe (2A) via a branch passage (12D) to enable the fluid to circulate towards the apparatus.

4. Device as claimed in one of claims 2 to 3, **characterised in that** it comprises two stops (16A, 16B), one (16A) of which is integral with the part (14) in which the piston (12) is guided and the other (16B) is integral with the part constituting said piston (12), said stops (16A, 16B) being designed to co-operate with a rigid element (16C) linking the two stops (16A, 16B) in the position assumed by these stops when the apparatus (3) is fitted.

5. Device as claimed in claim 4, **characterised in that**:
- the stops (16A, 16B) are each formed by a face of a circular neck disposed in an external face of each of the parts (12, 14) which support these stops and these necks are designed to receive the rigid linking element (16C) which is provided in the form of a ring comprising two half-parts and on the one hand comprises walls designed to engage in the circular necks and on the other hand constitutes an assembly means for these two half-parts which indicates an unauthorised dismantling operation.

## Patentansprüche

1. Haltevorrichtung (1), die zwischen zwei Abschnitten (2A, 2B) einer Rohrleitung ein Gerät (3) zum Messen einer Eigenschaft eines Fluids (4) aufnehmen kann, das in der Rohrleitung unter Druck fließt, wobei
- der Korpus (3A) des Geräts (3) zwei rohrförmige Teile (3C, 3D) umfasst, die ein Eintritts- und ein Austrittsrohr bilden, die, längs einer Achse (L) ausgerichtet, jeweils mit einer äußeren dichten Auflagefläche (3E, 3F) ausgestattet sind, die mit einer komplementären Auflagefläche (9A, 10A) zusammenwirkt,
- die Haltevorrichtung (1) ihrerseits Mittel (9, 10) zum dichten Verbinden und Befestigen der rohrförmigen Teile (3C, 3D) des Korpus (3A) des Geräts (3) aufweist, wobei die dichten Verbindungs- und Befestigungsmittel (9, 10) von einem Traggestell (5) gehalten werden,
- jedes dichte Verbindungsmittel (9, 10) zwei Auflageflächen (9A, 9B und 10A, 10B) aufweist, davon:
• eine Auflagefläche (9B, 10B) zum Zentrieren eines der Rohre (3C, 3D) des Geräts (3),
• die andere komplementäre Auflagefläche (9A 10A) zur dichten Anlage an der äußeren Auflagefläche (3E, 3F), die dieses Rohr (3C, 3D) aufweist,
• wobei wenigstens eine (9A, 10A) der dichten Auflageflächen an einem Teil vorhanden ist, das einen Kanal (12C) aufweist, wobei das Teil zwischen zwei Stellungen (P1, P2) beweglich ist, wovon eine Stellung (P1) von der Ebene der betrachteten äußeren Auflagefläche entfernt ist und eine Stellung (P2) tatsächlich zur Anlage gegen die äußere Auflagefläche gelangt, wobei sich das bewegliche Teil (12) in dem eintrittsseitig gelegenen Teil der Haltevorrichtung befindet,
wobei die Haltevorrichtung **dadurch gekennzeichnet ist, dass** das bewegliche Teil (12) ein Stößel (12) ist, der
- die bewegliche (9A) der dichten Auflageflächen (9A, 10A) und
- gegenüber der beweglichen Auflagefläche (9A) eine Fläche (12A) trägt, die dem Druckfluid (4), das das Messgerät (3) durchfließen soll, ausgesetzt ist, die so ausgebildet ist, dass unter der Einwirkung des Fluids (4) einerseits der starke Anpressdruck der beweglichen dichten Auflagefläche (9A) in Richtung zur und gegen die äußere Auflagefläche (3E) des Geräts, mit der sie zusammenwirken soll, herbeigeführt und aufrechterhalten wird, und andererseits infolge der Verlagerung des Geräts (3) der starke Anpressdruck der anderen äußeren Auflagefläche (3F) des Geräts (3) gegen die gegenüberliegende dichte Auflagefläche (10A) herbeigeführt und aufrechterhalten wird.

2. Vorrichtung nach Anspruch 1, **dadurch gekennzeichnet, dass** der Stößel (12) in einer Kammer (12B), die in einem mit dem Traggestell (5) fest verbundenen Teil (14) ausgebildet ist, translatorisch geführt ist, und deren Kanal (12C), der das Hindurchleiten des Fluids (4) zu dem Gerät (3) erlaubt, axial verläuft, wobei die der Einwirkung des Druckfluids ausgesetzten Fläche um diesen Kanal (12C) herum ausgebildet ist, um eine Ringfläche (12A) zu bilden.

3. Vorrichtung nach Anspruch 1, **dadurch gekennzeichnet, dass** der Stößel (12) einerseits in einer Kammer (12B), die in einem mit dem Traggestell (5) fest verbundenen Teil ausgebildet ist, translatorisch geführt ist, und andererseits von einem zylindrischen Teil gebildet ist, das die der Einwirkung des Fluids ausgesetzte Fläche (12A) aufweist, wobei die Fläche kreisförmig ist und der Kanal (12C) zum Hindurchleiten des Fluids zum Gerät durch eine Umgehungsleitung (12D) wenigstens indirekt mit dem eintrittsseitig gelegenen Rohrleitungsabschnitt (2A) verbunden ist.

4. Vorrichtung nach einem der Ansprüche 2 bis 3, **dadurch gekennzeichnet, dass** sie umfasst:
zwei Anschläge (16A, 16B), von denen einer (16A) mit dem Teil (14), in dem der Stößel (12) geführt wird, fest verbunden ist und der andere (16B) mit dem Teil, das den Stößel (12) bildet, fest verbunden ist, wobei die Anschläge (16A, 16B) dazu bestimmt sind, mit einem Element (16C) zur starren Verbindung der beiden Anschläge (16A, 16B) in der Stellung zusammenzuwirken, die die Anschläge einnehmen, wenn das Gerät (3) montiert ist.

5. Vorrichtung nach Anspruch 4, **dadurch gekennzeichnet, dass** die Anschläge (16A, 16B) jeweils durch die Fläche einer Ringnut realisiert sind, die in einer Außenseite an jedem der Teile (12, 14), die die Anschläge tragen, ausgebildet ist, und diese Nuten dazu bestimmt sind, das starre Verbindungselement (16C) aufzunehmen, das aus einem Ring besteht, der, in zwei Teilhälften ausgeführt, einerseits Wandungen, die zum Eingreifen in die Ringnuten bestimmt sind, und andererseits ein Mittel zum Verbinden der beiden Teilhälften aufweist, das eine unzulässige Demontage erkennbar macht.
